# EUROPÄISCHE PATENTSCHRIFT

(11) **EP 3 496 960 B1**
(45) Veröffentlichungstag und Bekanntmachung des Hinweises auf die Patenterteilung: **18.11.2020**
(21) Anmeldenummer: 17752370.1
(22) Anmeldetag: 10.08.2017
(51) Int. Cl.: B60C 23/04

(54) **ELEKTRONISCHE RADEINHEIT FÜR EIN FAHRZEUGRAD SOWIE VERFAHREN ZUM BETREIBEN EINER DERARTIGEN ELEKTRONISCHEN RADEINHEIT**
ELECTRONIC WHEEL UNIT FOR A VEHICLE WHEEL, AND METHOD FOR OPERATING AN ELECTRONIC WHEEL UNIT OF THIS KIND
UNITÉ DE ROUE ÉLECTRONIQUE POUR UNE ROUE DE VÉHICULE AINSI QUE PROCÉDÉ PERMETTANT DE FAIRE FONCTIONNER UNE UNITÉ DE ROUE ÉLECTRONIQUE DE CE TYPE

(30) Priorität: 10.08.2016 DE 102016214865
(43) Veröffentlichungstag der Anmeldung: 19.06.2019
(73) Patentinhaber: Continental Automotive GmbH, 30165 Hannover (DE)
(72) Erfinder: Kuchler, Gregor, verstorben (DE)
(86) Internationale Anmeldenummer: PCT/EP2017/070372
(87) Internationale Veröffentlichungsnummer: WO 2018/029320

(56) Entgegenhaltungen:
- EP-A2- 1 000 777
- JP-A- 2015 074 388
- US-A1- 2011 071 737

## Beschreibung

Die vorliegende Erfindung betrifft ein Verfahren zum Betreiben einer elektronischen Radeinheit sowie eine elektronische Radeinheit.

Jeweils zur Anordnung an einem Fahrzeugrad eines Fahrzeuges vorgesehene elektronische Radeinheiten sind beispielsweise aus den Veröffentlichungen DE 10 2009 059 788 B1, EP 2 470 381 B1, WO 2014/044355 A1 und WO 2014/198785 A1 bekannt.

Beispielsweise bei modernen Kraftfahrzeugen sind oftmals derartige, jeweils an einem der Fahrzeugräder des Fahrzeuges angeordnete elektronische Radeinheiten vorgesehen, mittels welchen vorbestimmte Betriebsparameter, insbesondere z. B. der Reifendruck, des jeweiligen Fahrzeugrades erfasst und insbesondere z. B. überwacht werden können. Ein damit im Fahrzeug realisiertes System zur Überwachung (zumindest) des Reifendruckes wird üblicherweise als Reifendruckkontrollsystem (RDKS, engl. "tire pressure monitoring system", kurz TPMS) bezeichnet. Von den elektronischen Radeinheiten können Messwerte des bzw. der Betriebsparameter des jeweiligen Fahrzeugrades gewonnen und per Funksignal an eine zentrale Fahrzeugelektronik gesendet werden. Vorteilhaft kann damit z. B. ein Fahrer des Fahrzeuges im Falle einer Abnormalität (z. B. zu niedriger Reifendruck) informiert werden.

Darüber hinaus können die von den elektronischen Radeinheiten an die Fahrzeugelektronik gesendeten Messwerte bzw. Daten aber auch ganz allgemein von großem Nutzen für eine Vielzahl von darauf basierenden Fahrzeugfunktionen sein. Neben der bereits erwähnten Reifendruckkontrolle seien hierzu lediglich beispielhaft z. B. eine Raddrehgeschwindigkeitsermittlung, eine Reifenlatschermittlung, eine Radlastermittlung sowie eine Reifenprofiltiefeermittlung genannt.

Als elektronische Radeinheiten weitverbreitet sind z. B. an einer Innenseite einer Reifenlauffläche des betreffenden Fahrzeugrades austauschbar angebrachte, z. B. batteriebetriebene Sensormodule mit einem oder mehreren Sensoren zum Messen des oder der aufzunehmenden Betriebsparameter sowie mit einem Funksender zur Funkübertragung von Signalen, welche für die gemessenen Werte der Betriebsparameter (einschließlich der Drehwinkelposition des Fahrzeugrades) repräsentative Daten beinhalten.

Die von den einzelnen Fahrzeugrädern bzw. den daran verbauten elektronischen Radeinheiten gesendeten Funksignale können von einem in dem Fahrzeug angeordneten zentralen Funkempfänger empfangen werden und stehen dann für eine weitere Verwendung der darin enthaltenden Daten zur Verfügung.

Wenngleich die von jeder elektronischen Radeinheit übertragenen Signale üblicherweise auch einen Identifikationscode der jeweiligen Radeinheit beinhalten, so besteht ein praktisches Problem darin, dass die tatsächlich vorliegende Zuordnung zwischen Radeinheit bzw. Identifikationscode einerseits und zugehöriger Verbauposition andererseits z. B. durch ein Austauschen bzw. Ummontieren von Reifen oder ganzen Fahrzeugrädern (z. B. durch Werkstattpersonal oder einen Benutzer des Fahrzeuges) geändert werden kann.

Daher kann zusätzlich zu der Erfassungs- bzw. Überwachungsfunktionalität eine Lokalisierung durchgeführt werden, deren Ziel darin besteht, jede elektronische Radeinheit der jeweils korrekten Verbauposition zuzuordnen, d. h. der Verbauposition desjenigen Fahrzeugrades, an welchem die Radeinheit tatsächlich angeordnet bzw. verbaut ist.

Aus dem Stand der Technik sind verschiedene Lokalisierungsverfahren bekannt, welche die Zuordnung zwischen den einzelnen elektronischen Radeinheiten und den Verbaupositionen der Fahrzeugräder vornehmen bzw. bedarfsweise aktualisieren können.

Diese Lokalisierungsverfahren beruhen zumeist darauf, dass durch Vergleichen von mittels "radbasierter", d. h. an einem jeweiligen Fahrzeugrad angeordneter Erfassungsmittel (in den elektronischen Radeinheiten) und von mittels "fahrzeugbasierter", d. h. am Fahrzeug angeordneter Erfassungsmittel (z. B. Drehzahlsensoren von Fahrassistenzsystemen wie ABS, ESP etc.) ermittelte Drehwinkelpositionsinformationen (beispielsweise Drehwinkelpositionen und zugehörige Erfassungszeitpunkte) eine Korrelation zwischen den ermittelten Drehwinkelpositionsinformationen ermittelt werden kann. Durch Analysieren dieser Korrelation kann sodann eine Zuordnung zwischen den elektronischen Radeinheiten und den Verbaupositionen vorgenommen werden.

Die Erfassungszeitpunkte der Drehwinkelpositionen können periodisch sein oder ein zeitlicher Abstand zwischen diesen Erfassungszeitpunkten kann in Abhängigkeit von der Fahrzeuggeschwindigkeit bzw. gleichbedeutend in Abhängigkeit von der (um den Gravitationsanteil bereinigten) Zentrifugalbeschleunigung an der Anordnungsstelle der elektronischen Radeinheit vorgegeben sein (Je schneller das Fahrzeug fährt, desto tendenziell häufiger wird gemessen und gesendet).

Bei diesen Methoden zur Vorgabe der Erfassungszeitpunkte wird davon ausgegangen, dass in jeweiligen Zeitintervallen zwischen aufeinanderfolgenden Erfassungszeitpunkten hinreichend große Raddrehungsunterschiede (z. B. Schlupfunterschiede) zwischen verschiedenen Fahrzeugrädern des Fahrzeuges entstehen, so dass jede erneute Drehwinkelpositionserfassung einen für das Lokalisierungsverfahren nutzbringenden Informationsgewinn darstellt. Die erwähnte Abhängigkeit der Vorgabe der Erfassungszeitpunkte von der Fahrzeuggeschwindigkeit berücksichtigt hierbei, dass bei höheren Fahrzeuggeschwindigkeiten tendenziell höhere Raddrehungsunterschiede, insbesondere z. B. Schlupfunterschiede, im Laufe der Zeit zu erwarten sind.

Jedoch hat sich herausgestellt, dass zur Ermittlung einer statistisch hinreichend aussagekräftigen Korrelation von jeder elektronischen Radeinheit dennoch oftmals jeweils mindestens ca. 10-50 Drehwinkelpositionen erfasst werden müssen.

Eine derart hohe Anzahl von erforderlichen Erfassungen bzw. Signalsendungen bedeutet einen hohen Zeit- und Energieaufwand und ist einer raschen Lokalisierung der elektronischen Radeinheiten abträglich.

Da in der Praxis ein möglichst rasch zum Ergebnis kommendes Lokalisierungsverfahren angestrebt wird, werden bei den bekannten elektronischen Radeinheiten in der Regel basierend auf jeder ermittelten Drehwinkelposition sofort entsprechende, d. h. diese Drehwinkelposition repräsentierende Daten erzeugt und in Form eines Funksignals gesendet. In diesen Daten muss der betreffende Erfassungszeitpunkt nicht explizit angegeben sein, da dieser Zeitpunkt im Wesentlichen dem Sendezeitpunkt des betreffenden Signals entspricht. Hierbei kann eine in der Praxis prinzipiell vorhandene Verzögerung zwischen Erfassungszeitpunkt und Sendezeitpunkt in geeigneter Weise (als additive Zeitkorrekturkonstante) berücksichtigt werden.

Bei den bekannten elektronischen Radeinheiten müssen dementsprechend in der Regel von jeder elektronischen Radeinheit zunächst ca. 10-50 Funksignale an die betreffende fahrzeugseitige Einrichtung gesendet werden, damit diese Einrichtung eine statistisch aussagekräftige Korrelation ermitteln und zwecks zuverlässiger Lokalisierung der Verbaupositionen der Radeinheiten analysieren kann.

In diesem Zusammenhang ist es bei den bekannten Lokalisierungsverfahren darüber hinaus nachteilig, dass es in vielen Ländern gesetzliche Bestimmungen gibt, welche die zulässige Anzahl von Funksignalen pro Zeiteinheit begrenzen, die von einer bestimmten technischen Einrichtung, wie hier den einzelnen elektronischen Radeinheiten gesendet werden dürfen.

So gibt es in einigen Ländern z. B. einen gesetzlich festgelegten zeitlichen Minimalabstand zwischen aufeinanderfolgenden Signalaussendungen desselben Senders, wobei dieser Zeitabstand z. B. 10 s betragen kann. In diesem Beispiel (mindestens 10 s Zeitabstand zwischen Signalen), wenn ein unter idealen Bedingungen ablaufendes Lokalisierungsverfahren z. B. 10 Funksignale benötigt, so bedeutet dies, dass es in der Regel eine Zeitdauer von mindestens 10 x 10 s = 100 s benötigt, bis durch das Lokalisierungsverfahren die Verbauposition der betreffenden elektronischen Radeinheit zugeordnet werden kann.

Aus der JP 2015 074388 A sind ein Verfahren zum Betreiben einer an einem Fahrzeugrad eines Fahrzeuges angeordneten elektronischen Radeinheit sowie eine derartige elektronische Radeinheit gemäß dem jeweiligen Oberbegriff des Anspruchs 1 bzw. 7 bekannt.

Aus der US 2011/071737 A1 ist ein Verfahren zum Ausführen einer Autolokalisierung eines Rades in einem Fahrzeug anhand von Radphasenwinkelinformationen bekannt, das die folgenden Schritte beinhaltet: Anordnen einer Radeinheit zum Assoziieren mit einem Rad des Fahrzeugs, wobei die Radeinheit einen Reifendruckkontrollsensor und einen Radphasenwinkelsensor umfasst und die Radeinheit den vom Reifendruckkontrollsensor gemessenen Reifendruck überträgt; Anordnen eines ABS-Sensors zum Assoziieren mit jedem Rad des Fahrzeugs, wobei der ABS-Sensor den Radphasenwinkel anzeigende ABS-Daten erzeugt; Messen, nach einer Rotation des Rades, eines Radphasenwinkels zu einem ersten Zeitpunkt und zu einem zweiten Zeitpunkt mit dem Radphasenwinkelsensor; Übertragen, von der Radeinheit, zum zweiten Zeitpunkt, eines die Radphasenwinkelinformationen und eine Identifikation des Reifendruckkontrollsensors beinhaltenden Daten-Frames; Empfangen, an einer elektronischen Steuereinheit, des Daten-Frames und Berechnen des ersten Zeitpunkts auf der Basis einer vorbestimmten Zeitverzögerung; Empfangen der mit jedem Rad assoziierten ABS-Daten; Korrelieren der Radphasenwinkelinformationen mit den ABS-Daten zum berechneten ersten Zeitpunkt und zum zweiten Zeitpunkt; und Zuordnen der Identifikation zu einem Ort des Rades, dessen ABS-Daten mit den Radphasenwinkelinformationen übereinstimmen.

Es ist eine Aufgabe der vorliegenden Erfindung, eine elektronische Radeinheit bzw. ein Verfahren zum Betreiben einer derartigen elektronischen Radeinheit anzugeben, mit denen ein rascher abzuschließendes Lokalisierungsverfahren ermöglicht wird.

Diese Aufgabe wird gemäß der Erfindung durch ein Betriebsverfahren nach Anspruch 1 bzw. eine elektronische Radeinheit nach Anspruch 7 gelöst. Die abhängigen Ansprüche sind auf vorteilhafte Weiterbildungen der Erfindung gerichtet.

Ein erster Aspekt der Erfindung betrifft ein Verfahren zum Betreiben einer an einem Fahrzeugrad eines Fahrzeuges angeordneten elektronischen Radeinheit, wobei die elektronische Radeinheit Erfassungsmittel zum Erfassen von zu bestimmten Erfassungszeitpunkten vorliegenden Drehwinkelpositionen des Fahrzeugrades und Funksendemittel zum Senden einer Folge von einzelnen elektromagnetischen Signalen, welche für die erfassten Drehwinkelpositionen und deren zugehörige Erfassungszeitpunkte repräsentative Daten beinhalten, aufweist. Mittels der Erfassungsmittel wird ferner ein Ausmaß einer Radbeschleunigung des Fahrzeugrades erfasst und ein zeitlicher Abstand zwischen den Erfassungszeitpunkten der Drehwinkelpositionen wird von den Erfassungsmitteln umso kleiner vorgegeben, je größer das Ausmaß der Radbeschleunigung ist.

Ein weiterer Aspekt der Erfindung betrifft eine elektronische Radeinheit zur Anordnung an einem Fahrzeugrad eines Fahrzeuges, aufweisend Erfassungsmittel zum Erfassen von zu bestimmten Erfassungszeitpunkten vorliegenden Drehwinkelpositionen des Fahrzeugrades und Funksendemittel zum Senden einer Folge von einzelnen elektromagnetischen Signalen, welche für die erfassten Drehwinkelpositionen und deren zugehörige Erfassungszeitpunkte repräsentative Daten beinhalten. Die Erfassungsmittel sind ferner dazu ausgebildet, ein Ausmaß einer Radbeschleunigung zu erfassen und einen zeitlichen Abstand zwischen den Erfassungszeitpunkten der Drehwinkelpositionen umso kleiner vorzugeben, je größer das Ausmaß der Radbeschleunigung ist.

Die Grundidee der Erfindung besteht darin, die Erfassungszeitpunkte der Drehwinkelpositionen derartig vorzugeben, dass damit für das Lokalisierungsverfahren möglichst nutzbringende Erfassungen erfolgen können. Insbesondere kann seitens jeder elektronischen Radeinheit z. B. ein mathematisches Modell der Fahrzeugdynamik implementiert werden, das die Entwicklung der Raddrehungsunterschiede (z. B. eine Schlupfentwicklung) anhand der erfassten Radbeschleunigung abschätzt und z.B. bei Erreichen eines Schwellwertes eine Messung der Drehwinkelposition auslöst.

Mit der Erfindung können vorteilhaft Erfassungen der Drehwinkelposition zielgerichtet z. B. jeweils dann erfolgen, wenn ein für die Auswertung (im Lokalisierungsverfahren) sinnvoller Datenbeitrag möglich erscheint. Vorteilhaft können unnötige bzw. störende Funkübertragungen und damit einhergehender Energie- bzw. z. B. Batterieverbrauch vermieden werden. Die Lokalisierungszeit verkürzt sich, wenn der Anteil verwertbarer Sendungen steigt.

Der Begriff "Radbeschleunigung" im Sinne der Erfindung bezeichnet eine für das betreffende Fahrzeugrad insgesamt bezüglich der Fahrumgebung (Erdboden) vorliegende Beschleunigung (translatorische Beschleunigung), die somit dann einen von Null verschiedenen Wert besitzt, wenn das Fahrzeugrad insgesamt bzw. dessen Massenmittelpunkt eine Beschleunigung bezüglich des Erdbodens (Inertialsystem) erfährt. Insofern führt weder die aus einem Abrollvorgang resultierende Radrotation um die Raddrehachse noch eine durch etwaige Lenkdrehbewegungen (bei einem gelenkten Fahrzeugrad) bewirkte Raddrehung als solche zu einer Radbeschleunigung im Sinne der Erfindung. Vielmehr entsteht auch im Falle eines fahrenden Fahrzeuges eine von Null verschiedene Radbeschleunigung nur dann, wenn die auf den Erdboden bezogene Geschwindigkeit des gesamten Rades bzw. des Radmassenmittelpunktes sich zeitlich ändert. Für ein auf ebener Fahrbahn mit konstanter Geschwindigkeit geradeaus fahrendes Fahrzeug sind die Radbeschleunigungen der Fahrzeugräder daher Null. Bei Kurvenfahrten und (positiven oder negativen) Beschleunigungsvorgängen des Fahrzeuges hingegen ergibt sich eine solche Radbeschleunigung (in Radquerrichtung bzw. Radabrollrichtung).

In einer Ausführungsform der Erfindung ist vorgesehen, dass der zeitliche Abstand mit steigendem Ausmaß der Radbeschleunigung (mathematisch ausgedrückt) monoton, insbesondere z. B. streng monoton, fällt.

Der Begriff "Ausmaß" bezeichnet in diesem Zusammenhang entweder den Wert der Radbeschleunigung oder einen davon abgeleiteten Wert, der mit zunehmender Radbeschleunigung steigt und in diesem Sinne auch ein Maß dieser Beschleunigung darstellt.

In einer weiteren Ausführungsform der Erfindung ist vorgesehen, dass das Ausmaß der Radbeschleunigung eine Radlängsbeschleunigung (in Abrollrichtung) und/oder eine Radquerbeschleunigung (quer zur Abrollrichtung) berücksichtigt.

Insofern kann es sich bei dem Ausmaß der Radbeschleunigung z. B. insbesondere um den Wert der Radlängsbeschleunigung (bei einem ungelenkten Fahrzeugrad gleichbedeutend mit einer Fahrzeuglängsbeschleunigung) oder um den Wert der Radquerbeschleunigung (bei einem ungelenkten Fahrzeugrad gleichbedeutend mit einer Fahrzeugquerbeschleunigung) handeln. Darüber hinaus kann das Ausmaß der Radbeschleunigung z. B. auch durch eine mathematische Kombination enthaltend die Ausmaße der Radlängsbeschleunigung und der Radquerbeschleunigung dargestellt werden.

In einer Ausführungsform der Erfindung ist vorgesehen, dass das Ausmaß der Radbeschleunigung periodisch erfasst wird, z. B. mit einer Periode im Bereich von 2 s bis 6 s.

In einer anderen Ausführungsform ist vorgesehen, dass das Ausmaß der Radbeschleunigung zu Zeitpunkten erfasst wird, die mittels der Erfassungsmittel variabel vorgegeben werden.

Hierzu kann vorgesehen sein, dass diese Zeitpunkte z. B. in Abhängigkeit von einer oder mehreren Größen vorgegeben werden, die mittels der Erfassungsmittel im Bereich des betreffenden Fahrzeugrades erfasst werden. Beispielsweise kann vorgesehen sein, dass ein zeitlicher Abstand zwischen den Erfassungen des Ausmaßes der Beschleunigung in Abhängigkeit von einer Raddrehgeschwindigkeit des betreffenden Fahrzeugrades und/oder in Abhängigkeit von der Zentrifugalbeschleunigung an der Anordnungsstelle der elektronischen Radeinheit vorgegeben wird.

Für sämtliche Varianten ist es in der Regel bevorzugt, das Ausmaß der Radbeschleunigung in zeitlichen Abständen zu erfassen, die im Bereich von 1 s bis 10 s liegen.

In einer Weiterbildung des erfindungsgemäßen Betriebsverfahrens ist vorgesehen, dass die Signale jeweils Daten beinhalten, die mindestens drei der erfassten Drehwinkelpositionen und deren zugehörige Erfassungszeitpunkte repräsentieren. In einer entsprechenden Weiterbildung der elektronischen Radeinheit ist vorgesehen, dass die Signale jeweils Daten beinhalten, die mindestens drei der erfassten Drehwinkelpositionen und deren zugehörige Erfassungszeitpunkte repräsentieren. Die Anzahl der von den Daten eines Signals repräsentierten Drehwinkelpositionen und zugehörigen Erfassungszeitpunkten kann fest vorgegeben sein oder von Signal zu Signal variieren. Insbesondere können die Daten eines Signals z. B. mindestens 4 oder z. B. mindestens 5 der erfassten Drehwinkelpositionen und deren zugehörige Erfassungszeitpunkte repräsentieren. Andererseits ist es zumeist vorteilhaft, wenn die Daten eines Signals z. B. maximal 100, insbesondere maximal 50 der erfassten Drehwinkelpositionen und deren zugehörige Erfassungszeitpunkte repräsentieren. Die Grundidee dieser Weiterbildung besteht darin, dass für ein jeweiliges der Fahrzeugräder radbasiert (durch die betreffende elektronische Radeinheit) zunächst mindestens drei (oder noch mehr) Drehwinkelpositionen mitsamt deren zugehörigen Erfassungszeitpunkten akkumuliert bzw. zwischengespeichert werden, um diese Vielzahl von unabhängig voneinander gewonnenen Drehwinkelpositionsinformationen sodann durch Daten zu repräsentieren, die mit einem einzigen Funksignal gesendet werden. Für das oben erläuterte Beispiel eines gesetzlich geforderten minimalen Zeitabstandes zwischen Signalen von 10 s und einer aus statistischen Gründen erforderlichen Anzahl von z. B. 10 Drehwinkelpositionsinformationen können z. B. zunächst eine bestimmte Anzahl, z. B. 10 Drehwinkelpositionen mitsamt deren zugehörigen 10 Erfassungszeitpunkten erfasst und zwischengespeichert werden, um diese Informationen sodann mittels nur eines einzigen Funksignals zu senden. Es benötigt dann weniger zu sendende Funksignale, bis durch das Lokalisierungsverfahren die Verbauposition der betreffenden elektronischen Radeinheit zugeordnet werden kann. Vorteilhaft trägt diese Weiterbildung daher dazu bei, die Geschwindigkeit der Lokalisierung weiter zu steigern. Ein weiterer Vorteil der Weiterbildung, unabhängig von der Möglichkeit zur Steigerung der Lokalisierungsgeschwindigkeit, besteht darin, dass die Sendehäufigkeit reduziert werden kann, wodurch wiederum z. B. die Wahrscheinlichkeit des Auftretens funktechnischer Kollisionen (bei mehreren Sendern) und z. B. der Energieverbrauch der Funksendemittel vorteilhaft verringert werden kann.

In einer weiteren Ausführungsform ist vorgesehen, dass die Anzahl der von den Daten eines Signals repräsentierten Drehwinkelpositionsinformationen (jeweils bestehend aus einer Drehwinkelposition und dem zugehörigen Erfassungszeitpunkt) abhängig von einer momentanen Drehwinkelgeschwindigkeit des betreffenden Fahrzeugrades gewählt wird. Insbesondere kann diese Anzahl für größere Drehwinkelgeschwindigkeiten des Fahrzeugrades ansteigend gewählt werden.

Gemäß einer Ausführungsform der Erfindung sind die einzelnen Erfassungszeitpunkte der Drehwinkelpositionen zu Zeitpunkten vorgesehen, zu denen das betreffende Fahrzeugrad eine vorbestimmte Drehwinkelposition besitzt. Diese Drehwinkelposition kann z. B. so gewählt sein, dass deren Auftreten aufgrund der konkreten Erfassungsmethode besonders präzise detektierbar ist.

In einer Weiterbildung der Erfindung wird der zeitliche Abstand zwischen den Erfassungszeitpunkten der Drehwinkelpositionen von den Erfassungsmitteln ferner umso kleiner vorgegeben, je größer eine momentane Drehwinkelgeschwindigkeit des betreffenden Fahrzeugrades ist. Diese Weiterbildung kombiniert die Idee einer von der Drehwinkelgeschwindigkeit abhängigen Erfassungsrate mit der Idee einer mit dem Ausmaß einer Radbeschleunigung variierenden Erfassungsrate.

Allgemein ist bevorzugt, dass ein zeitlicher Abstand zwischen aufeinanderfolgenden der Erfassungszeitpunkte mindestens so groß ist wie diejenige Zeitspanne, während der das Fahrzeugrad mehr als eine, insbesondere mehr als zwei volle (360°) Umdrehungen vollführt. Andererseits ist es in der Regel vorteilhaft, wenn dieser zeitliche Abstand höchstens so groß ist wie eine Zeitspanne, während der das Fahrzeugrad weniger als 20, insbesondere weniger als 10, volle Umdrehungen vollführt. Eine Zeitdifferenz zwischen aufeinanderfolgenden der Erfassungszeitpunkte, kann ganz allgemein z. B. vorteilhaft in einem Bereich von 0,1 bis 30 s, insbesondere 0,1 bis 20 s, liegen.

Bei einer Verwendung mehrerer elektronischer Radeinheiten bei einem im Rahmen der Erfindung vorgesehenen Lokalisierungsverfahren kann jede einzelne elektronische Radeinheit jeweils so betrieben werden bzw. ausgebildet sein, wie dies hier bereits für "eine/die Radeinheit" beschrieben wurde.

Die Aussendung der Signale kann z. B. im Wesentlichen periodisch erfolgen (z. B. mit periodisch aufeinanderfolgenden Startzeitpunkten und/oder periodisch aufeinanderfolgenden Endzeitpunkten der Signale). Eine entsprechende Zeitdifferenz (z. B. zwischen aufeinanderfolgenden Startzeitpunkten oder aufeinanderfolgenden Endzeitpunkten) kann z. B. fest vorgegeben sein und z. B. in einem Bereich von 1 s bis 40 s, weiter bevorzugt 5 s bis 20 s, liegen.

Alternativ oder zusätzlich kann die Zeitdifferenz zwischen aufeinanderfolgenden Startzeitpunkten (oder aufeinanderfolgenden Endzeitpunkten) variabel gewählt sein, insbesondere so, dass bei ansteigender Drehwinkelgeschwindigkeit des betreffenden Fahrzeugrades diese Zeitdifferenz abnimmt. Bei variabler Zeitdifferenz wird diese Zeitdifferenz bevorzugt in den Daten der Signale codiert. Dazu kann z. B. vorgesehen sein, dass die Daten eines Signals ferner eine Information über die Zeitdifferenz zu dem vorangegangenen und/oder dem nachfolgenden Signal repräsentieren. In diesem Fall kann fahrzeugseitig diese Information decodiert und bei der Auswertung der Signale berücksichtigt werden.

Die Erfassungsmittel der elektronischen Radeinheit können z. B. einen Beschleunigungssensor (alternativ z. B. einen Schocksensor, einen Dehnungssensor etc.) aufweisen, mittels welchem im Fahrbetrieb zu den betreffenden Erfassungszeitpunkten die Drehwinkelpositionen des betreffenden Fahrzeugrades erfasst werden. Des Weiteren können die Erfassungsmittel z. B. eine programmgesteuerte Auswerteeinrichtung zum Auswerten des (wenigstens einen) Sensorsignals des bzw. der Sensoren aufweisen. Eine solche Auswerteeinrichtung (z. B. ein Mikrocontroller) kann basierend auf derartigen Sensorsignalen die Daten erzeugen, welche an die Funksendemittel zum Senden der entsprechenden Signale übermittelt werden. Schließlich kann die Auswerteeinrichtung auch zur Vorgabe der Erfassungszeitpunkte der Drehwinkelpositionen verwendet werden.

Der erwähnte Beschleunigungssensor der Erfassungsmittel kann z. B. dazu ausgebildet sein, eine Radialbeschleunigung (Zentrifugalbeschleunigung) an der Anordnungsstelle der elektronischen Radeinheit zu messen. Das Sensorsignal kann in diesem Fall in einfacher Weise insbesondere zur Ermittlung der Raddrehgeschwindigkeit (und/oder der translatorischen Radgeschwindigkeit) ausgewertet werden. Darüber hinaus kann dasselbe Sensorsignal somit im Rahmen der Erfindung in einfacher Weise zur Ermittlung der bereits erwähnten Radlängsbeschleunigung herangezogen werden (Die Radlängsbeschleunigung ist die zeitliche Änderungsrate der translatorischen Radgeschwindigkeit in Abrollrichtung) .

Alternativ oder zusätzlich können die Erfassungsmittel auch einen Beschleunigungssensor aufweisen, der ein für die Tangentialbeschleunigung an der Anordnungsstelle der elektronischen Radeinheit repräsentatives Sensorsignal liefert. Auch ein derartiges Sensorsignal lässt sich in einfacher Weise zur Ermittlung der Radlängsgeschwindigkeit und/oder der Radlängsbeschleunigung auswerten.

Des Weiteren, insbesondere wenn im Rahmen der Erfindung ein die Radquerbeschleunigung berücksichtigendes Ausmaß der Radbeschleunigung vorgesehen ist, können die Erfassungsmittel einen Beschleunigungssensor zum Messen eben dieser Radquerbeschleunigung aufweisen.

Je nach primärem Verwendungszweck der betreffenden elektronischen Radeinheit (z. B. zur Reifendruckkontrolle) können die Erfassungsmittel selbstverständlich alternativ oder zusätzlich einen oder mehrere Sensoren zum Messen anderer Radbetriebsparameter (z. B. Reifendruck, Reifentemperatur etc.) aufweisen.

Die Funksendemittel der elektronischen Radeinheit können für die davon gesendeten elektromagnetischen Signale z. B. eine Trägerfrequenz von einerseits mindestens 1 MHz und andererseits z. B. maximal 5 GHz vorsehen.

Ein weiterer Aspekt betrifft ein Verfahren zum Lokalisieren jeweiliger Verbaupositionen von mehreren elektronischen Radeinheiten der hier beschriebenen Art, die jeweils an einem von mehreren Fahrzeugrädern eines Fahrzeuges angeordnet sind, wobei das Fahrzeug umfasst:
- am Fahrzeug angeordnete und jeweils einem der Fahrzeugräder zugeordnete Erfassungsmittel (z. B. Drehzahlsensoren eines ABS- und/oder ESP-Systems), nachfolgend als feste Erfassungsmittel bezeichnet, zum jeweiligen Erfassen von zu bestimmten Erfassungszeitpunkten vorliegenden Drehwinkelpositionen des betreffenden Fahrzeugrades und
- Sendemittel (z. B. eine Schnittstelle zu einem digitalen Bussystem) zum Senden von Signalen, welche für die von den festen Erfassungsmitteln erfassten Drehwinkelpositionen und deren zugehörige Erfassungszeitpunkte repräsentative Daten beinhalten,
wobei das Verfahren umfasst:
- Empfangen und Auswerten der mittels der elektronischen Radeinheiten gesendeten Signale, um die mittels der (radbasierten) Erfassungsmittel der elektronischen Radeinheiten erfassten Drehwinkelpositionen und deren zugehörige Erfassungszeitpunkte zu ermitteln,
- Empfangen und Auswerten der mittels der (fahrzeugbasierten) festen Erfassungsmittel des Fahrzeuges gesendeten Signale, um die mittels der festen Erfassungsmittel erfassten Drehwinkelpositionen und deren zugehörige Erfassungszeitpunkte zu ermitteln,
- Vergleichen der mittels der Erfassungsmittel der elektronischen Radeinheiten ermittelten Drehwinkelpositionen und der mittels der festen Erfassungsmittel des Fahrzeuges ermittelten Drehwinkelpositionen unter Berücksichtigung derer jeweiligen Erfassungszeitpunkte, um eine Korrelation zwischen den ermittelten Drehwinkelpositionen zu ermitteln, und
- Analysieren der Korrelation, um eine Zuordnung zwischen den elektronischen Radeinheiten und den Verbaupositionen der Fahrzeugräder vorzunehmen.

Gemäß eines weiteren Aspekts wird eine Vorrichtung aufweisend Mittel zur Durchführung eines derartigen Lokalisierungsverfahrens vorgeschlagen.

Eine derartige Vorrichtung kann z. B. ein im Fahrzeug angeordnetes zentrales Steuergerät beinhalten oder von einem solchen gebildet sein, welches mit geeigneten Schnittstellen zum Empfangen der erforderlichen Signale und mit der erforderlichen Rechenkapazität (z. B. mittels eines Mikrocontrollers oder dergleichen) ausgestattet ist.

Gemäß eines weiteren Aspekts der Erfindung ist ein Computerprogrammprodukt vorgesehen, aufweisend einen Programmcode, der auf einer Datenverarbeitungseinrichtung ausgeführt ein Betriebsverfahren einer elektronischen Radeinheit der hier beschriebenen Art durchführt.

Die Erfindung wird nachfolgend anhand von Ausführungsbeispielen mit Bezug auf die beigefügten Zeichnungen weiter beschrieben. Es stellen dar:
- Fig. 1: eine Seitenansicht eines mit einer elektronischen Radeinheit ausgestatteten Fahrzeugrades gemäß eines Ausführungsbeispiels,
- Fig. 2: ein Blockschaltbild der elektronischen Radeinheit von Fig. 1,
- Fig. 3: ein Diagramm zur Veranschaulichung einer Erfassung von Drehwinkelpositionen des Fahrzeugrades von Fig. 1 und der darauf basierenden Aussendung einer Folge von Funksignalen im Verlauf der Zeit,
- Fig. 4: eine schematische Draufsicht eines Kraftfahrzeuges, welches mit einem Reifendruckkontrollsystem ausgestattet ist und hierzu mit elektronischen Radeinheiten ausgestattete Fahrzeugräder der in den Fig. 1 und 2 gezeigten Art aufweist, und
- Fig. 5: ein Flussdiagramm zur Veranschaulichung eines in dem Fahrzeug von Fig. 4 durchgeführten Lokalisierungsverfahrens.

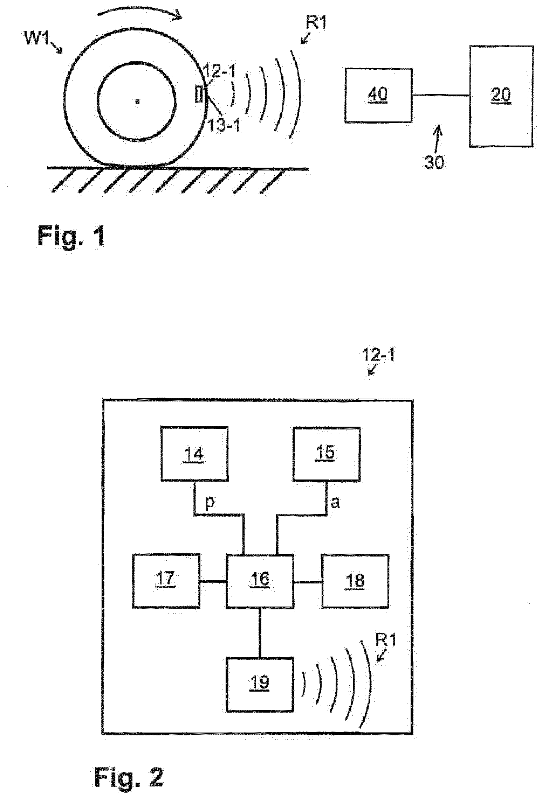

Fig. 1 zeigt ein Fahrzeugrad W1, an welchem eine elektronische Radeinheit 12-1 angeordnet ist, und zwar im dargestellten Beispiel an einer Innenseite einer Reifenlauffläche des mit einem luftbefüllten Reifen versehenen Fahrzeugrades W1.

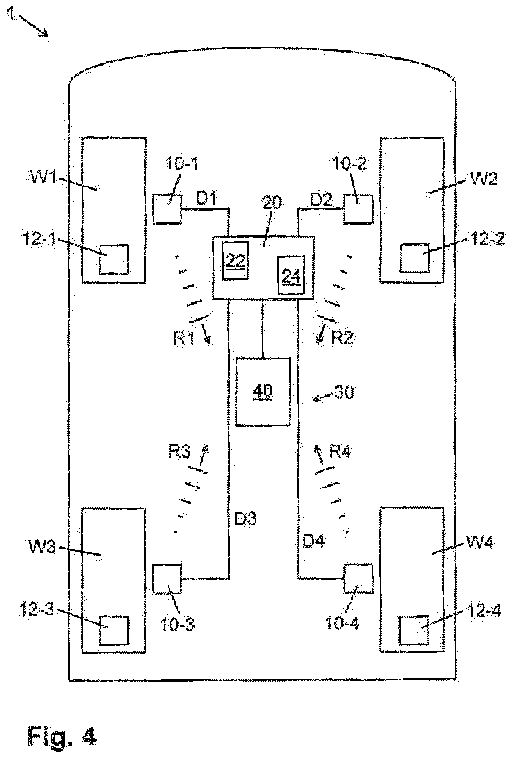

Der primäre Zweck der elektronischen Radeinheit 12-1 besteht darin, im Betrieb des betreffenden Fahrzeuges (vgl. z. B. Fig. 4) einen Reifen(innen)druck "p" zu messen und von Zeit zu Zeit entsprechende Messergebnisse mittels eines elektromagnetischen Signals (Funksignal) R1 an eine fahrzeugbasierte, d. h. in dem betreffenden Fahrzeug angeordnete Funkempfangseinheit 40 zu senden.

Im dargestellten Beispiel steht die Funkempfangseinheit 40 über ein digitales Bussystem 30 in Kommunikationsverbindung mit einem zentralen Steuergerät 20, welches in jedem Funksignal R1 enthaltene Daten, hier insbesondere Messwerte des Reifendruckes p, auswertet und/oder für eine Weiterverwendung in anderen Teilen einer Bordelektronik des betreffenden Fahrzeuges zur Verfügung stellt.

In den Daten des Signals R1 ist des Weiteren ein Identifikationscode der Radeinheit 12-1 enthalten, so dass jedes empfangene Signal von dem Steuergerät 20 eindeutig dieser Radeinheit 12-1 zugeordnet werden kann.

Im Falle der Ausstattung mehrerer Fahrzeugräder mit derartigen Radeinheiten verbleibt dann jedoch immer noch das Problem, die anhand der Daten eines Signals identifizierte Radeinheit der betreffenden Verbauposition zuzuordnen, d. h. der Verbauposition (z. B. bei einem PKW: vorne links, vorne rechts, hinten links, hinten rechts) desjenigen Fahrzeugrades, an welchem die Radeinheit tatsächlich angeordnet bzw. verbaut ist.

Zum Zwecke einer derartigen Lokalisierung jeder Radeinheit, wie z. B. der dargestellten Radeinheit 12-1, ist im dargestellten Ausführungsbeispiel vorgesehen, dass die Daten des Signals R1 ferner jeweils mehrere Drehwinkelpositionsinformationen repräsentieren, welche jeweils mittels der Radeinheit 12-1 erfasste Drehwinkelpositionen des Fahrzeugrades W1 und deren zugehörige Erfassungszeitpunkte angeben.

Abweichend von diesem Beispielkönnten die Daten des Signals R1 jeweils auch nur eine einzige Drehwinkelpositionsinformation (Drehwinkelposition und zugehöriger Erfassungszeitpunkt) repräsentieren.

Das Steuergerät 20 vergleicht die radbasiert erfassten Drehwinkelpositionsinformationen der betreffenden Fahrzeugräder mit fahrzeugbasiert erfassten Drehwinkelpositionsinformationen, um damit eine Korrelation zwischen den ermittelten Informationen zu ermitteln und durch Analysieren dieser Korrelation schließlich eine Zuordnung zwischen den einzelnen Radeinheiten und deren Verbaupositionen vorzunehmen.

Fig. 2 zeigt den Aufbau der elektronischen Radeinheit 12-1 detaillierter.

Die Radeinheit 12-1 umfasst einen Drucksensor 14 zur Messung des momentanen Reifendruckes "p" sowie einen Beschleunigungssensor 15 zur Messung einer momentanen Radialbeschleunigung "a".

Bei einer in Fig. 1 durch einen Pfeil symbolisierten Drehung des Fahrzeugrades W1 misst der Beschleunigungssensor 15 die an einer Anordnungsstelle 13-1 vorliegende Radialbeschleunigung a.

Da sich die Radialbeschleunigung a aus einer durch die Gravitation bedingten Komponente und einer durch die Drehung des Fahrzeugrades W1 hervorgerufenen Komponente zusammensetzt, kann durch eine entsprechende Auswertung des Sensorsignals (z. B. mittels Extraktion der Gravitationskomponente) die momentane Drehwinkelposition ermittelt werden.

Außerdem kommt es aufgrund einer sich im unteren Umfangsbereich des Rades W1 ausbildenden Reifenaufstandsfläche bei jedem Durchgang der Radeinheit 12-1 bzw. der Anordnungsstelle 13-1 durch den Bereich dieser Reifenaufstandsfläche hindurch zu entsprechenden Signalcharakteristika in dem vom Beschleunigungssensor 15 gelieferten Sensorsignal.

Auch anhand dieser Signalcharakteristika, die z. B. bei einer Fahrt mit konstanter Geschwindigkeit periodisch auftreten, kann somit ein Durchgang der Anordnungsstelle 13-1 durch die Reifenaufstandsfläche und durch eine weitere Auswertung des Sensorsignals in einfacher Weise zu jedem Zeitpunkt die momentane Drehwinkelposition des Fahrzeugrades W1 ermittelt werden.

Abweichend von der Verwendung eines Beschleunigungssensors könnte z. B. auch ein so genannter Schocksensor oder ein Verformungssensor oder ein anderer geeigneter Sensor eingesetzt werden, um durch Auswertung von dessen Sensorsignal eine Erfassung einer Drehwinkelposition zu einem bestimmten Erfassungszeitpunkt zu realisieren.

In der Radeinheit 12-1 werden die für den Reifendruck p und die Beschleunigung a repräsentativen Messwerte, wie in Fig. 2 ersichtlich, an eine programmgesteuerte Auswerteeinrichtung, hier einen Mikrocontroller 16, kommuniziert, welcher basierend darauf die Daten erzeugt und an eine Funksendeeinheit 19 kommuniziert, mittels welcher das diese Daten enthaltende Signal R1 gesendet wird. Die Daten beinhalten hierbei wie bereits erwähnt mehrere Drehwinkelpositionsinformationen.

Eine Besonderheit der elektronischen Radeinheit 12-1 besteht darin, dass eine variable Zeitdifferenz zwischen aufeinanderfolgenden Erfassungszeitpunkten der Drehwinkelpositionen vorgesehen wird. Konkret wird im dargestellten Beispiel hierfür mittels der elektronischen Radeinheit 12-1 ein Ausmaß der Radlängsbeschleunigung des Fahrzeugrades W1 erfasst und ein zeitlicher Abstand zwischen den Erfassungszeitpunkten der Drehwinkelpositionen tendenziell umso kleiner vorgegeben, je größer das Ausmaß der Radlängsbeschleunigung ist.

Alternativ oder zusätzlich könnte mittels der elektronischen Radeinheit 12-1 auch ein Ausmaß der Radquerbeschleunigung des Fahrzeugrades W1 erfasst und der zeitliche Abstand zwischen den Erfassungszeitpunkten der Drehwinkelpositionen tendenziell umso kleiner vorgegeben werden, je größer das Ausmaß der Radlängsbeschleunigung ist.

Ferner könnte zusätzlich auch eine Abhängigkeit des zeitlichen Abstandes zwischen den Erfassungszeitpunkten von der Drehwinkelgeschwindigkeit des Fahrzeugrades W1 vorgesehen sein. Die Erfassung der Radlängsbeschleunigung wie auch der Drehwinkelgeschwindigkeit des Fahrzeugrades W1 lässt sich mittels des Mikrocontrollers 16 durch entsprechende Auswertung des von dem Beschleunigungssensor 15 gelieferten Sensorsignals bewerkstelligen.

Falls (auch) die Radquerbeschleunigung erfasst werden soll, so bietet es sich an, entweder den in der elektronischen Radeinheit 12-1 enthaltenen Beschleunigungssensor 15 zur Messung (auch) der Querbeschleunigung geeignet auszubilden oder einen separaten Beschleunigungssensor (nicht dargestellt) zur Messung der Querbeschleunigung in die elektronischen Radeinheit 12-1 zu integrieren.

Im Hinblick auf die Vorgabe der Erfassungszeitpunkte ist der Mikrocontroller 16 im dargestellten Beispiel zur Zeitmessung mit einer in der Radeinheit 12-1 enthaltenen Uhr 17 verbunden. Alternativ könnte eine solche Uhr 17 z. B. auch als Teilfunktionalität des Mikrocontrollers 16 durch diesen selbst implementiert sein.

Im dargestellten Beispiel werden eine oder mehrere erfasste Drehwinkelpositionen zunächst akkumuliert, unter Zwischenspeicherung der entsprechenden Drehwinkelpositionsinformation(en) in einer mit dem Mikrocontroller 16 verbundenen Speichereinheit 18, in welcher z. B. auch ein Programmcode zur Ablaufsteuerung für den Mikrocontroller 16 abgespeichert sein kann.

Zu vorbestimmten Sendezeitpunkten (z. B. periodisch) initiiert der Mikrocontroller 16 die Aussendung eines die entsprechenden Daten enthaltenden Signals R1. Die Daten enthalten hierbei jeweils die seit der letzten Aussendung erfassten und zwischengespeicherten Drehwinkelpositionsinformationen.

Die einzelnen Erfassungszeitpunkte (bezogen auf den Gang der radbasierten Uhr 17) können innerhalb der Daten des betreffenden Signals R1 z. B. durch entsprechende Zeitangaben ("Zeitmarken") codiert sein, so dass diese Zeitangaben empfängerseitig wieder decodiert und im Rahmen des Lokalisierungsverfahrens genutzt werden können.

Abweichend vom dargestellten Beispiel, bei dem die Daten jeweils Erfassungszeitpunkte und zugehörige Drehwinkelpositionen explizit angeben, wäre es auch möglich, dass die mit dem Signal R1 gesendeten Daten nur die Erfassungszeitpunkte explizit angeben, wohingegen die zugehörigen Drehwinkelpositionen implizit dadurch von den Daten repräsentiert werden, dass diese z.B. fest vorgegeben sind. Beispielsweise könnte vorgesehen sein, dass sämtliche Erfassungen stets bei ein und derselben, fest vorgegebenen Drehwinkelposition stattfinden.

Im dargestellten Beispiel wird nach jeweils 10 s erneut das Signal R1 gesendet, welches Daten betreffend vorangehend (seit der letzten Signalsendung) erfasste Drehwinkelpositionsinformationen enthält.

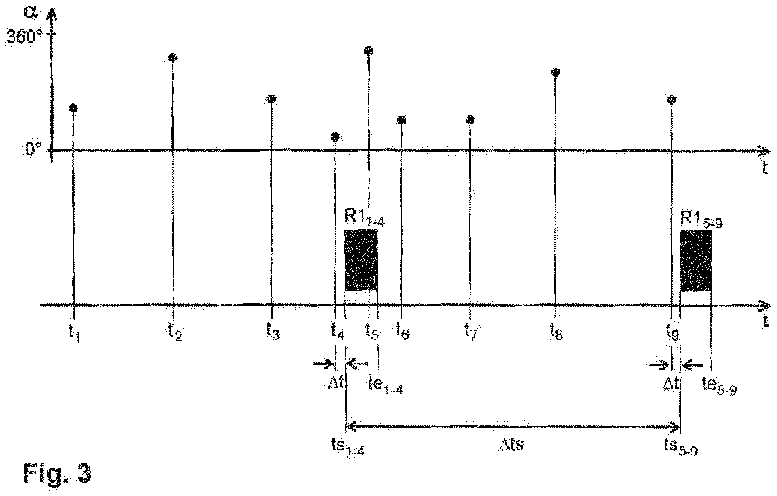

Fig. 3 veranschaulicht beispielhaft diese Betriebsweise der Radeinheit 12-1.

Fig. 3 ist ein Zeitverlaufsdiagramm und zeigt im oberen Teil durch Punkte gekennzeichnete zeitdiskret erfasste Drehwinkelpositionen αᵢ, welche zu zugehörigen Erfassungszeitpunkten tᵢ erfasst wurden. Der Index "i" bezeichnet hierbei eine laufende Nummer der entsprechenden Erfassung (Messung). In Fig. 3 dargestellt sind die Messungen für i = 1, 2, 3, ... 7, 8, 9.

Jede Drehwinkelposition αᵢ kann hierbei Werte in einem Bereich von 0° bis 360° (entsprechend einer vollen Umdrehung des Fahrzeugrades W1) annehmen. Der Wert von 0°, aufgrund der Periodizität gleichbedeutend mit einem Wert von 360°, kann gemäß einer beliebigen Konvention einer bestimmten Drehstellung des Rades W1 zugeordnet werden, beispielsweise einer Position, bei welcher die Anordnungsstelle 14-1 (vgl. Fig. 1) der elektronischen Radeinheit 12-1 sich ganz oben (oder alternativ z. B. ganz unten) befindet.

Wie aus Fig. 3 ersichtlich, werden die Messungen der Drehwinkelposition α mit variablen zeitlichen Abständen (t₂-t₁, t₃-t₂, t₄-t₃, ...) im Verlauf der Zeit t durchgeführt. Der gegenseitige Abstand zwischen den Zeitpunkten t₁, t₂, t₃, ... liegt im dargestellten Beispiel stets im Bereich von 0,2 s bis 10 s und wird wie erwähnt tendenziell umso kleiner vorgegeben, je größer das Ausmaß der erwähnten (momentanen) Radbeschleunigung, hier z. B. der Radlängsbeschleunigung, ist.

Im dargestellten Beispiel könnte hierfür z. B. bei unterhalb eines ersten Schwellwertes liegendem Wert der Radlängsbeschleunigung der zeitliche Abstand (tᵢ₊₁-tᵢ) aufeinanderfolgender Erfassungen mit 10 s vorgegeben werden und bei überhalb eines zweiten Schwellwertes liegendem Wert der Radlängsbeschleunigung mit 0,2 s vorgegeben werden, wobei für den Zwischenbereich (erster Schwellwert ≤ Radlängsbeschleunigung ≤ zweiter Schwellwert) im einfachsten Fall z. B. eine lineare Abhängigkeit (Abnahme des zeitlichen Abstandes mit zunehmender Radlängsbeschleunigung) vorgesehen sein könnte. Letztere Abhängigkeit könnte jedoch auch anders vorgesehen sein und/oder durch weitere Abhängigkeiten (z. B. von der Radquerbeschleunigung und/oder der Raddrehwinkelgeschwindigkeit) modifiziert sein.

Der aus Fig. 3 beispielhaft ersichtlichen Variation der zeitlichen Abstände tᵢ₊₁-tᵢ könnte somit z. B. das Szenario zugrunde liegen, dass im Zeitraum von etwa t₁ bis t₅ der Fahrer das Fahrzeug zunehmend beschleunigt (oder bremst) und im Zeitraum von etwa t₆ bis tg diese Beschleunigung (bzw. Bremsung) wieder reduziert, so dass im Zeitraum von etwa t₄ bis t₆ relativ rasch aufeinander folgende Erfassungen der Drehwinkelpositionen (α₄ bis α₆) erfolgen.

Wie aus Fig. 3 weiter ersichtlich, werden die bis zu einem bestimmten Sendezeitpunkt gesammelten Drehwinkelpositionen α₁ bis α₄ zusammen mit deren zugehörigen Erfassungszeitpunkten t₁ bis t₄ von der elektronischen Radeinheit 12-1 in Daten aufgenommen, die mit einem Funksignal R1₁₋₄ an die Funkempfangseinheit 40 gesendet werden.

Die in gleicher Weise sodann gesammelten Drehwinkelpositionen α₅ bis α₉ werden zusammen mit deren zugehörigen Erfassungszeitpunkten t₅ bis t₉ von der elektronischen Radeinheit 12-1 in Daten aufgenommen, die mit einem nachfolgenden Funksignal R1₅₋₉ an die Funkempfangseinheit 40 gesendet werden.

Ein Startzeitpunkt ts jedes Signals R1, in Fig. 3 dargestellt ein Startzeitpunkt tS₁₋₄ des Signals R1₁₋₄ und ein Startzeitpunkt ts₅₋₉ des Signals R1₅₋₉, ist im dargestellten Beispiel in einer vorbestimmten Weise mit den vom betreffenden Signal R1 beinhalteten Daten korreliert. Diese Korrelation besteht darin, dass eine Zeitdifferenz Δt zwischen den jeweils letzten der in den Daten enthaltenden Erfassungszeitpunkten (hier z. B. die Zeitpunkte t₄ und t₉) und dem Startzeitpunkt ts des betreffenden Signals (hier tS₁₋₄ bzw. ts₅₋₉) fest vorgegeben ist. Diese Zeitdifferenz Δt beträgt im dargestellten Beispiel z. B. ca. 0,4 s.

Außerdem ist im dargestellten Beispiel vorgesehen, dass die Startzeitpunkte ts aufeinanderfolgender Signale R1, hier also z. B. die Startzeitpunkte ts₁₋₄ und ts₅₋₉, mit einer vorbestimmten Zeitdifferenz Δts periodisch aufeinanderfolgen. Im dargestellten Beispiel beträgt diese Zeitdifferenz Δts = 15 s.

Nach dem Empfangen der Signale R1 durch die Funkempfangseinheit 40 und Zuleitung der darin enthaltenen Daten an das zentrale Steuergerät 20, welches über eine eigene, fahrzeugseitige Uhr verfügt, werden im Rahmen einer Auswertung der Daten die unmittelbar aus den empfangenen Daten ermittelten (und auf die radbasierte Uhr in der Radeinheit 12-1 bezogenen) Erfassungszeitpunkte tᵢ umgerechnet in Erfassungszeitpunkte tᵢ*, die auf den Gang der fahrzeugseitigen Uhr bezogen sind.

Ein derartiger Uhrenabgleich zwischen der radseitigen Uhr 17 und der fahrzeugseitigen Uhr kann fahrzeugseitig z. B. dadurch realisiert werden, dass die Zeitdifferenz Δts zwischen aufeinanderfolgenden Startzeitpunkten (hier z. B. zwischen den Zeitpunkten tS₁₋₄ und ts₅₋₉) mittels der fahrzeugseitigen Uhr gemessen und mit der Vorgabe Δts = 15 s verglichen wird, womit anhand einer (typischerweise auftretenden kleinen) Abweichung zwischen dem nominellen Wert von 15 s und der tatsächlich fahrzeugseitig gemessenen Zeitdifferenz der Ganggeschwindigkeitsunterschied zwischen der radseitigen Uhr 17 in der Radeinheit 12-1 und der fahrzeugseitigen Uhr festgestellt werden kann.

Angenommen, die fahrzeugseitige Messung der Zeitdifferenz Δts = 15 s ergibt eine auf die fahrzeugseitige Uhr bezogene Zeitspanne von Δts* = 14,8 s, so bedeutet dies, dass die radseitige Uhr 17 um einen Faktor Δts/Δts* = 15 s / 14,8 s = 1,014 zu schnell läuft. Basierend auf dem so berechneten Umrechnungsfaktor, hier 1,014 kann sodann z. B. der "echte" Zeitpunkt t₄* (bezogen auf die fahrzeugseitige Uhr) berechnet werden als der fahrzeugseitig gemessene Zeitpunkt ts₁₋₄* abzüglich 1,014 x 0,4 s.

Schließlich können sodann z. B. die übrigen Erfassungszeitpunkte t₁ bis t₃ z. B. anhand der ebenfalls mit dem Faktor 1,014 korrigierten entsprechenden Zeitdifferenzen t₄ - t₁, t₄ - t₂ und t₄ - t₃ berechnet werden. Der auf die fahrzeugseitige Uhr bezogene Zeitpunkt t₁* ergibt sich damit z. B. als: t₁* = t₄* - 1,014 x (t₄ -t₁).

Ein derartiger Uhrenabgleich kann fortlaufend oder von Zeit zu Zeit durchgeführt werden (Aktualisierung des Umrechnungsfaktors) .

Der vorstehend am Beispiel der Radeinheit 12-1 des Fahrzeugrades W1 erläuterte Uhrenabgleich kann in entsprechender Weise für die an einem oder mehreren weiteren Fahrzeugrädern desselben Fahrzeuges verbauten Radeinheiten durchgeführt werden.

Basierend auf den somit für sämtliche Fahrzeugräder auf die gemeinsame fahrzeugseitige Uhr bezogenen Erfassungszeitpunkten kann sodann ein Lokalisierungsverfahren durchgeführt werden, um jede elektronische Radeinheit der jeweils korrekten Verbauposition zuzuordnen.

Da die zeitlichen Abstände zwischen den Erfassungszeitpunkten t₁, t₂, t₃ ... jeweils variabel, in Abhängigkeit von einem aktuellen Ausmaß der Radbeschleunigung vorgesehen sind (und gegebenenfalls z. B. zusätzlich abhängig von einer momentanen Drehwinkelgeschwindigkeit des betreffenden Fahrzeugrades), können mittels der elektronischen Radeinheit vorteilhaft besonders aussagekräftige Drehwinkelpositionsinformationen gewonnen und übermittelt werden.

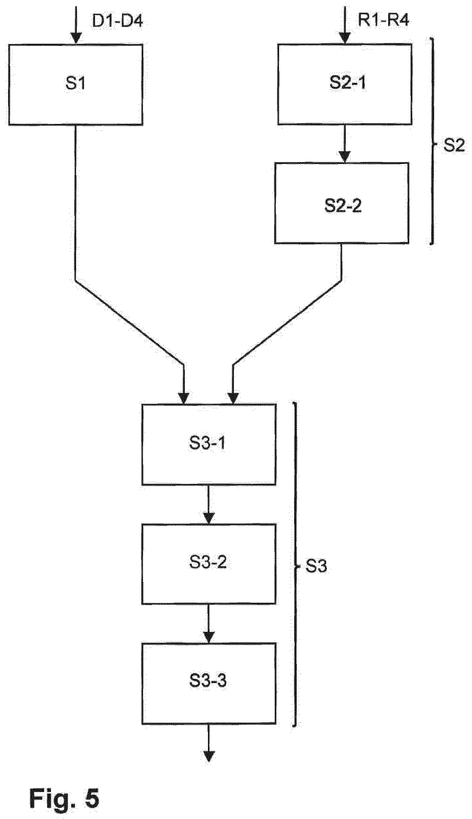

Die Anordnung einer Mehrzahl von elektronischen Radeinheiten an einer entsprechenden Mehrzahl von Fahrzeugrädern sowie ein hierbei durchgeführtes Lokalisierungsverfahren werden nachfolgend mit Bezug auf die Fig. 4 und 5 erläutert.

Fig. 4 zeigt ein Kraftfahrzeug 1, hier z. B. einen PKW, bei welchem vier Fahrzeugräder W1 bis W4 an Verbaupositionen "vorne links", "vorne rechts", "hinten links" und "hinten rechts" angeordnet sind.

In diesem Beispiel sei angenommen, dass es sich bei dem Fahrzeugrad W1 mitsamt elektronischer Radeinheit 12-1 um das bereits mit Bezug auf die Fig. 1 bis 3 beschriebene Fahrzeugrad handelt und dass die weiteren Fahrzeugräder W2 bis W4 mitsamt deren elektronischen Radeinheiten 12-2 bis 12-4 einen jeweils entsprechenden Aufbau besitzen, so dass auf eine detaillierte Beschreibung der Räder W1 bis W4 mitsamt deren Radeinheiten 12-1 bis 12-4 an dieser Stelle verzichtet werden soll.

Die von den Radeinheiten 12-1 bis 12-4 (z. B. allesamt periodisch) gesendeten Funksignale sind in Fig. 4 mit R1 bis R4 bezeichnet.

Die Funkempfangseinheit 40 überträgt die mittels dieser Signale R1-R4 empfangenen Daten über das digitale Bussystem 30 (z. B. LIN-Bussystem oder dergleichen) an das zentrale Steuergerät 20, welches zur Auswertung der Daten (betreffend die Reifendrücke und Drehwinkelpositionen) der Fahrzeugräder W1-W4 mit einer Recheneinheit 22 und einer digitalen Speichereinheit 24 ausgestattet ist. Die Speichereinheit 24 enthält hierbei insbesondere einen Programmcode zur Ablaufsteuerung der Auswertung im Steuergerät 20.

Bei dem Fahrzeug 1 sind fahrzeugbasierte, jeweils wie dargestellt einem der Fahrzeugräder W1-W4 zugeordnete Drehzahlsensoren 10-1 bis 10-4 vorgesehen, mittels welchen eine zeitaufgelöste Erfassung der Drehwinkelpositionen der einzelnen Fahrzeugräder W1 bis W4 durchgeführt wird.

Ausgehend von den Drehzahlsensoren 10-1 bis 10-4 werden entsprechende Daten (d.h. Drehwinkelpositionen zusammen mit deren zugehörigen Erfassungszeitpunkten) D1-D4 über das digitale Bussystem 30 an das zentrale Steuergerät 20 gesendet.

Das im Steuergerät 20 durchgeführte Lokalisierungsverfahren umfasst folgende Schritte:
- Empfangen und Auswerten der mittels der elektronischen Radeinheiten 12-1 bis 12-4 gesendeten Signale R1-R4, um die mittels der jeweiligen radbasierten Erfassungsmittel 15, 16, 17, 18 der elektronischen Radeinheiten 12-1 bis 12-4 erfassten Drehwinkelpositionen αᵢ und deren zugehörige Erfassungszeitpunkte tᵢ zu ermitteln,
- Empfangen und Auswerten der mittels der fahrzeugbasierten Drehzahlsensoren 10-1 bis 10-4 des Fahrzeuges 1 gesendeten Signale D1-D4, um die mittels der Drehzahlsensoren 10-1 bis 10-4 erfassten Drehwinkelpositionen und deren zugehörige Erfassungszeitpunkte zu ermitteln,
- Vergleichen der mittels der elektronischen Radeinheiten 12-1 bis 12-4 ermittelten Drehwinkelpositionen und der mittels der Drehzahlsensoren 10-1 bis 10-4 des Fahrzeuges 1 ermittelten Drehwinkelpositionen unter Berücksichtigung derer jeweiligen Erfassungszeitpunkte, um eine Korrelation zwischen den ermittelten Drehwinkelpositionen zu ermitteln, und
- Analysieren der Korrelation, um eine Zuordnung zwischen den elektronischen Radeinheiten 12-1 bis 12-4 und den Verbaupositionen (hier: "vorne links", "vorne rechts", "hinten links" und "hinten rechts") der Fahrzeugräder W1-W4 vorzunehmen.

Fig. 5 zeigt in einem Flussdiagramm nochmals wesentliche Schritte dieses Lokalisierungsverfahrens.

In einem Schritt S1 erfolgt das Empfangen und Auswerten der mittels der fahrzeugbasierten Drehzahlsensoren 10-1 bis 10-4 gesendeten Signale D1-D4.

In einem Schritt S2 erfolgt das Empfangen und Auswerten der mittels der radbasierten elektronischen Radeinheiten 12-1 bis 12-4 gesendeten Signale R1-R4, wobei dieser Schritt S2 aus zwei Unterschritten S2-1 und S2-2 besteht.

Im Unterschritt S2-1 erfolgt ein Extrahieren der in den empfangenen Daten enthaltenen Drehwinkelpositionen mitsamt derer zugehöriger Erfassungszeitpunkte.

Im Unterschritt S2-2 erfolgt ein fahrzeugseitiges Messen wenigstens eines Zeitpunktes und/oder einer Zeitdifferenz hinsichtlich des empfangenen Signals und ein Umrechnen dieser Erfassungszeitpunkte in Erfassungszeitpunkte, die auf eine fahrzeugseitige Uhr bezogen sind.

In einem Schritt S3, der sich aus Unterschritten S3-1, S3-2 und S3-3 zusammensetzt, wird schließlich der eigentliche Algorithmus zur Lokalisierung der Verbaupositionen der Radeinheiten 12-1 bis 12-4 durchgeführt.

Im Unterschritt S3-1 werden, für jede der Radeinheiten bzw. für jeden derer Identifikationscodes, die mittels der Radeinheiten ermittelten Drehwinkelpositionen und die mittels der Fahrzeugbasierten festen Erfassungsmittel ermittelten Drehwinkelpositionen unter Berücksichtigung derer jeweiligen Erfassungszeitpunkte einem Vergleich unterzogen. Hierbei können z. B. eine der Anzahl an berücksichtigten Fahrzeugrädern entsprechende Mehrzahl von Verteilungsmustern ermittelt werden, die z. B. für jeden Identifikationscode aufzeigen, wie stark radbasiert für den betreffenden Identifikationscode ermittelte Drehwinkelpositionsinformationen von jeder der fahrzeugbasiert ermittelten Drehwinkelpositionsinformationen abweichen.

Im Unterschritt S3-2 wird basierend auf einem Ergebnis des Vergleiches, z. B. gesondert für jeden Identifikationscode, eine Korrelation zwischen den einerseits radbasiert und andererseits fahrzeugbasiert ermittelten Drehwinkelpositionsinformationen ermittelt. Hierzu können z. B. vorbestimmte Korrelationsparameter berechnet werden, z. B. Parameter welche charakteristisch dafür sind, mit welcher Wahrscheinlichkeit eine bestimmte Radeinheit bzw. deren Identifikationscode einer bestimmten Verbauposition zugehörig ist.

Im Unterschritt S3-3 erfolgt schließlich ein Analysieren der Korrelation (en), um eine Zuordnung zwischen den Radeinheiten und den Verbaupositionen vorzunehmen. Hierbei kann die Zuordnung z. B. darauf beruhen, dass für jede Radeinheit bzw. deren Identifikationscode die jeweils statistisch wahrscheinlichste Verbauposition zugeordnet wird und/oder umgekehrt für jede Verbauposition die statistisch wahrscheinlichste Radeinheit zugeordnet wird.

### Bezugszeichenliste

- 1: Kraftfahrzeug
- W1 bis W4: Fahrzeugräder
- 10-1 bis 10-4: Drehzahlsensoren
- D1 bis D4: Signale der Drehzahlsensoren
- 12-1 bis 12-4: elektronische Radeinheiten
- 13-1: Anordnungsstelle
- 14: Drucksensor
- 15: Beschleunigungssensor
- 16: Auswerteeinrichtung (Mikrocontroller)
- 17: radseitige Uhr
- 18: Speichereinheit
- 19: Funksendeeinheit
- R1 bis R4: Signale der elektronischen Radeinheiten
- 20: zentrales Steuergerät
- 22: Recheneinheit
- 24: Speichereinheit
- 30: digitales Bussystem
- 40: Funkempfangseinheit
- t: Zeit
- α: Drehwinkel
- t₁, t₂, t₃, ...: Erfassungszeitpunkte
- Δt: Zeitdifferenz
- ts: Startzeitpunkt
- te: Endzeitpunkt
- Δts: Zeitdifferenz

## Patentansprüche

1. Verfahren zum Betreiben einer an einem Fahrzeugrad (W) eines Fahrzeuges (1) angeordneten elektronischen Radeinheit (12), wobei die elektronische Radeinheit (12) umfasst:
- Erfassungsmittel (15, 16, 17, 18) zum Erfassen von zu bestimmten Erfassungszeitpunkten vorliegenden Drehwinkelpositionen des Fahrzeugrades (W) und
- Funksendemittel (19) zum Senden einer Folge von einzelnen elektromagnetischen Signalen (R), welche für die erfassten Drehwinkelpositionen und deren zugehörige Erfassungszeitpunkte repräsentative Daten beinhalten,
**dadurch gekennzeichnet, dass** mittels der Erfassungsmittel (15, 16, 17, 18) ferner ein Ausmaß einer Radbeschleunigung des Fahrzeugrades (W) erfasst wird und ein zeitlicher Abstand zwischen den Erfassungszeitpunkten der Drehwinkelpositionen von den Erfassungsmitteln (15, 16, 17, 18) umso kleiner vorgegeben wird, je größer das Ausmaß der Radbeschleunigung ist.

2. Verfahren nach Anspruch 1, wobei das Ausmaß der Radbeschleunigung eine Radlängsbeschleunigung und/oder eine Radquerbeschleunigung berücksichtigt.

3. Verfahren nach einem der vorangehenden Ansprüche, wobei das Ausmaß der Radbeschleunigung periodisch erfasst wird.

4. Verfahren nach einem der vorangehenden Ansprüche, wobei das Ausmaß der Radbeschleunigung zu Zeitpunkten erfasst wird, die mittels der Erfassungsmittel (15, 16, 17, 18) variabel vorgegeben werden.

5. Verfahren nach einem der vorangehenden Ansprüche, wobei die Signale (R) jeweils Daten beinhalten, die mindestens drei der erfassten Drehwinkelpositionen und deren zugehörige Erfassungszeitpunkte repräsentieren.

6. Verfahren nach einem der vorangehenden Ansprüche, wobei die Anzahl der von den Daten eines Signals (R) repräsentierten Drehwinkelpositionen samt zugehörigen Erfassungszeitpunkten abhängig von einer momentanen Drehwinkelgeschwindigkeit des betreffenden Fahrzeugrades (W) gewählt wird.

7. Elektronische Radeinheit (12) zur Anordnung an einem Fahrzeugrad (W) eines Fahrzeuges (1), aufweisend
- Erfassungsmittel (15, 16, 17, 18) zum Erfassen von zu bestimmten Erfassungszeitpunkten vorliegenden Drehwinkelpositionen des Fahrzeugrades und
- Funksendemittel (19) zum Senden einer Folge von einzelnen elektromagnetischen Signalen, welche für die erfassten Drehwinkelpositionen und deren zugehörige Erfassungszeitpunkte repräsentative Daten beinhalten,
**dadurch gekennzeichnet, dass** die Erfassungsmittel (15, 16, 17, 18) ferner dazu ausgebildet sind, ein Ausmaß einer Radbeschleunigung zu erfassen und einen zeitlichen Abstand zwischen den Erfassungszeitpunkten der Drehwinkelpositionen umso kleiner vorzugeben, je größer das Ausmaß der Radbeschleunigung ist.

8. Computerprogrammprodukt aufweisend einen Programmcode, der auf einer Datenverarbeitungseinrichtung einer an einem Fahrzeugrad (W) eines Fahrzeuges (1) angeordneten elektronischen Radeinheit (12) ausgeführt ein Verfahren nach einem der Ansprüche 1 bis 6 durchführt.

## Claims

1. Method for operating an electronic wheel unit (12) arranged on a vehicle wheel (W) of a vehicle (1), the electronic wheel unit (12) comprising:
- detecting means (15, 16, 17, 18) for detecting rotation angle positions of the vehicle wheel (W) that are present at certain detection times and
- radio transmission means (19) for transmitting a sequence of individual electromagnetic signals (R) that include data representative of the detected rotation angle positions and the associated detection times thereof,
**characterized in that** the detecting means (15, 16, 17, 18) are further used to detect an amount of a wheel acceleration of the vehicle wheel (W), and an interval of time between the detection times of the rotation angle positions is predefined by the detecting means (15, 16, 17, 18) to be shorter the greater the amount of wheel acceleration.

2. Method according to Claim 1, wherein the amount of wheel acceleration takes into account a longitudinal wheel acceleration and/or a transverse wheel acceleration.

3. Method according to either of the preceding claims, wherein the amount of wheel acceleration is detected periodically.

4. Method according to one of the preceding claims, wherein the amount of wheel acceleration is detected at times that are predefined variably by means of the detecting means (15, 16, 17, 18).

5. Method according to one of the preceding claims, wherein the signals (R) each include data representing at least three of the detected rotation angle positions and the associated detection times thereof.

6. Method according to one of the preceding claims, wherein the number of rotation angle positions represented by the data of a signal (R), together with associated detection times, is selected as a function of a current rotation angle velocity of the relevant vehicle wheel (W).

7. Electronic wheel unit (12) for arrangement on a vehicle wheel (W) of a vehicle (1), comprising
- detecting means (15, 16, 17, 18) for detecting rotation angle positions of the vehicle wheel that are present at certain detection times and
- radio transmission means (19) for transmitting a sequence of individual electromagnetic signals that include data representative of the detected rotation angle positions and the associated detection times thereof,
**characterized in that** the detecting means (15, 16, 17, 18) are further designed to detect an amount of a wheel acceleration and to predefine an interval of time between the detection times of the rotation angle positions to be shorter the greater the amount of wheel acceleration.

8. Computer program product comprising a program code that, when executed on a data processing device of an electronic wheel unit (12) arranged on a vehicle wheel (W) of a vehicle (1), performs a method according to one of Claims 1 to 6.

## Revendications

1. Procédé de fonctionnement d'une unité de roue électronique (12) disposée sur une roue de véhicule (W) d'un véhicule (1), l'unité de roue électronique (12) comprenant :
- des moyens de détection (15, 16, 17, 18) destinés à détecter des positions d'angle de rotation, présentes à des instants de détection déterminés, de la roue de véhicule (W) et
- des moyens de transmission radio (19) destinés à envoyer une séquence de signaux électromagnétiques individuels (R) qui contiennent des données représentatives des positions d'angle de rotation détectées et de leurs instants de détection associés,
**caractérisé en ce que** l'amplitude d'une accélération de la roue de véhicule (W) est en outre détectée à l'aide des moyens de détection (15, 16, 17, 18) et un intervalle de temps entre les instants de détection des positions d'angle de rotation est spécifié par les moyens de détection (15, 16, 17, 18), lequel intervalle de temps est d'autant plus petit que l'amplitude de l'accélération de la roue est grande.

2. Procédé selon la revendication 1, l'amplitude de l'accélération de la roue prenant en compte une accélération longitudinale de la roue et/ou une accélération transversale de la roue.

3. Procédé selon l'une des revendications précédentes, l'amplitude de l'accélération de la roue étant détectée périodiquement.

4. Procédé selon l'une des revendications précédentes, l'amplitude de l'accélération de la roue étant détectée à des instants qui sont spécifiés de manière variable à l'aide des moyens de détection (15, 16, 17, 18).

5. Procédé selon l'une des revendications précédentes, les signaux (R) contenant chacun des données qui représentent au moins trois des positions d'angle de rotation détectées et leurs instants de détection associés.

6. Procédé selon l'une des revendications précédentes, le nombre de positions d'angle de rotation représentées par les données d'un signal (R), y compris les instants de détection associés, étant choisi en fonction d'une vitesse angulaire instantanée de la roue de véhicule (W) concernée.

7. Unité de roue électronique (12) destinée à être disposée sur une roue (W) d'un véhicule (1), ladite unité comportant
- des moyens de détection (15, 16, 17, 18) destinés à acquérir des positions d'angle de rotation, présentes à certains instants de détection, de la roue du véhicule et
- des moyens de transmission radio (19) destinés à émettre une séquence de signaux électromagnétiques individuels qui contiennent des données représentatives des positions d'angle de rotation détectées et de leurs instants de détection associés,
**caractérisée en ce que** les moyens de détection (15, 16, 17, 18) sont en outre conçus pour détecter une amplitude d'accélération de roue et pour spécifier un intervalle de temps entre les instants de détection des positions d'angle de rotation, lequel intervalle de temps est d'autant plus petit que l'amplitude de l'accélération de la roue est grande.

8. Progiciel comportant un code programme qui, lorsqu'il est exécuté sur un dispositif de traitement de données d'une unité de roue électronique (12) disposée sur une roue (W) d'un véhicule (1), met en œuvre un procédé selon l'une des revendications 1 à 6.
